# EUROPEAN PATENT APPLICATION

(11) **EP 2 784 550 A2**
(43) Date of publication of application: **01.10.2014**
(21) Application number: 14157212.3
(22) Date of filing: 28.02.2014
(51) Int. Cl.: G01V 1/28, G01V 1/30, G01V 1/40

(54) **Acoustic borehole imaging tool**

(30) Priority: 28.02.2013 US 201313780292
(71) Applicant: Weatherford/Lamb, Inc., Houston, TX 77056 (US)
(72) Inventor: Medhat, Mickael, Sugar Land, TX Texas 77478 (US)
(74) Representative: Shanks, Andrew

(57) **Abstract**

A logging system for producing borehole images of acoustic properties of formations penetrated by the borehole. Images of formation compressional wave and shear wave velocities are generated in real time. The system can be a LWD system with a source section that comprises a unipole, dipole, quadrupole or other acoustic source. The receiver section comprises multiple receiver stations disposed at different axial spacings from the acoustic source. The system requires that the source and receiver sections rotate synchronously as the logging tool its conveyed along the borehole. Receiver responses are measured in a plurality of azimuthal angle segments and processed as a fonction of rotation angle of the tool. Acoustic parameters of interest are obtained from the azimuthal receiver responses at annotated depths along the borehole and used to produce borehole images of the parameters of interest.

## Description

### BACKGROUND

Borehole imaging is routinely used while drilling wells for hydrocarbon production. Images of the borehole wall and properties of formations intersecting the wall are used in various drilling and formation evaluation techniques. These images are generated using natural gamma radiation, electromagnetic, neutron or density measurements. Electrical imaging provides high resolution images but is typically limited to water based drilling fluids or "muds". More specifically, electromagnetic measurements are used to determine resistivity, conductivity, dielectric formation properties and the like. Natural gamma ray measurements provide meaningful images only when the contrast in the penetrated formations is a function of natural radioactivity such as sand shale reservoirs. Such contrast does not exist in carbonates. As an example, beddings comprising limestone and dolomite exhibit essentially no meaningful contrast since limestone and dolomite are low in natural gamma ray activity. Borehole images based upon gamma ray density measurements show formation bedding only as a function of density and are independent of natural radioactivity content. Likewise, borehole images based upon neutron porosity measurements show formation bedding only as a function of porosity and are independent of natural radioactivity content. Density and neutron porosity imaging tools employ radioactive gamma ray and neutron sources, respectively. In certain areas, radioactive sources can not be used due to regulations or the fear of losing the bottom hole equipment, containing the radioactive source, in the borehole.

Acoustic measurements are somewhat similar to density measurements in that the acoustic compressional wave or shear wave velocities are related to the traversed formation material. In this sense, acoustic measurements can be used as a replacement of density measurements. Formation anisotropy can be determined with acoustic logging-while-drilling (LWD) or measurement-while-drilling (MWD) systems. Formation anisotropy can also be determined with acoustic wireline systems after the borehole drilling operation is complete. MWD, LWD, and wireline acoustic logging systems comprising monopole and dipole acoustic sources have been used in the prior art as shown, for example, in U.S. Patent Nos. 7,623,412 B2, 5,808,963, 6,714,480 B2, 7,310,285 B2, 7,646,674 B2. The prior art cited above does not yield acoustic borehole images. Simply stated, there are no known acoustic borehole imaging systems that can produce images of acoustic properties of the borehole in real time.

### SUMMARY

Disclosed herein is a system for producing borehole images of acoustic properties of formations intersecting a borehole wall. Images of formation compressional wave and shear wave velocities are generated in real time. Additional formation information can be obtained from the images by combining them with additional independent parametric measurements. The system can be embodied as a LWD system, but is not limited to LWD systems, and the basic concepts may be as a MWD or wireline logging system. The details of the system are hereafter disclosed as a LWD system.

The borehole instrument or "logging tool" comprises a source section comprising a source of acoustic energy, and a receiver section. The logging tool is typically a drill collar in the LWD embodiment. The source section comprises preferably a unipole source of acoustic energy that may be focused perpendicular to the wall of the borehole. Alternately, a dipole source may be used as will be discussed in a subsequent section of this disclosure. The unipole source may be operated at a frequency of approximately 6-16 kilohertz (KHz). The receiver section comprises an array of receivers. In a preferred embodiment, the receiver section comprises six receiver stations each comprising an acoustic receiver. In this embodiment, the receivers are focused perpendicular to the borehole wall, axially spaced at different distances from the source section, and azimuthally aligned with each other and with the acoustic source. An isolator section isolates the source and receiver sections from direct acoustic energy transmission. The logging tool also comprises an instrument section comprising power, processor, memory and control elements, a downhole telemetry section, and a directional section that yields the absolute orientation of the logging tool. In addition to the logging tool, the logging system comprises a conveyance means, draw works, surface equipment comprising a surface telemetry element, and a surface recorder. All system elements will be described in detail in subsequent sections of this disclosure. The source and receiver sections of the logging tool rotate azimuthally as the logging tool is conveyed along the well borehole.

The acoustic source within the source section is fired periodically as the logging tool rotates within the borehole. The acoustic wave field generated by the acoustic pulse is received by the receivers in the receiver section as full acoustic waveforms. As the logging tool rotates, waveforms from each of the preferably six receivers are sampled and may be digitized every 100 milliseconds or other sample time increment. These waveforms may be partitioned or "binned" into azimuthal angle segments or "azimuthal segments" based on a toolface measurements by the directional tool. In a preferred embodiment, the bins are typically 22.5 degrees wide yielding 16 contiguous azimuthal segments for each 360 degree tool rotation. The binning continues for a sample time increment of 5 to 30 seconds, with the waveforms being algebraically summed or "stacked" in each respective azimuthal segment bin over the sample time increment. At the end of the sample time increment, stacked waveforms from each of six receivers are semblance process for each of the 16 azimuthal segments. The processing yields a measure of compressional wave and shear wave velocity for each azimuthal segment at a given tool depth (or axial position in the case of deviated boreholes) within the well borehole. The process is repeated as the tool is conveyed along the well borehole thereby collecting "raw" data to be processed, as disclosed in subsequent sections, into acoustic parameters of interest

Mathematical formalism used in this disclosure is outlined as follows. In a preferred embodiment, the parameters W_{i,j}(x) are the stacked, full waveforms measured by receiver i (i = 1, ... ,6), at depth x within the well borehole, in azimuthal segment j where (j = 1, 2, ... ,16). Stacked waveforms from all of the six receivers "i" are semblance process for each azimuthal segment yielding V_{p,j}(x) and V_{s,j}(x), the compressional and shear wave velocities, respectively, determined in azimuthal segments j where again j (j = 1, 2, ... ,16). The depth x is the depth of an axial reference point on the tool, and is typically selected to be midway between the axial center of the source section and the axial detector array. The parameters V_{p,j}(x) and V_{s,j}(x) are plotted as a function ofj and x thereby forming borehole wall images of compressional and shear velocities.

"Standard" logs of Vp(x) and Vₛ(x) can also be obtained by stacking all full wave forms recorded in all azimuthal sectors (j = 1, 2, ... ,16), again using semblance and a time sample increment of 5 to 10 seconds. This yields a standard log of Vp(x) and Vₛ(x) plotted as a function of depth x.

One aspect of the invention relates to a method for determining a borehole image of one or more acoustic parameters of a formation intersecting the borehole, said method comprising:
providing a logging tool with an acoustic source section comprising an acoustic source and a receiver section comprising a plurality of receiver stations disposed at differing axial spacings from said acoustic source wherein said source and said receiver sections are axially aligned;
measuring responses of said receivers to energy emitted by said source in a plurality of azimuthal angular segments and stacking said measured responses for a sample time increment thereby forming a full waveform stack for each said azimuthal angular segment;
processing said full waveform stacks for each said azimuthal angular segment to determine said one or more acoustic parameters as a function of azimuthal angle;
annotating said one or more acoustic parameters as a function of azimuthal as a function of depth of said logging tool within said borehole to form a pixel line at that depth;
repeating the measuring, processing and annotating as said logging tool is conveyed along said borehole thereby forming a plurality of pixel lines as a function of depth; and
forming said borehole image from said pixel lines as a function of depth;
wherein said one or more acoustic parameters include at least one of compressional wave velocity or compressional wave slowness.

The acoustic source may be a unipole source.

The acoustic source may be a dipole source.

The acoustic source may be a quadrupole source.

The receiver section may comprise six receiver stations.

The acoustic parameter may further comprise at least one of shear wave velocity or shear wave slowness.

The depths of bed boundaries of a plurality of formations may be obtained from said borehole image of said compressional wave velocity.

The mechanical strength of said formation may be obtained by combining said compressional wave velocity with corresponding non-acoustic data of said formation.

Another aspect of the invention relates to a method of generating borehole images of compressional wave and shear wave velocities of a formation intersecting the borehole wall, the method comprising:
disposing within a borehole a tool, the tool comprising:
   at least one acoustic source;
   a plurality of acoustic receivers arranged at a plurality of spacings from the at least one acoustic source along a longitudinal axis of the tool; and
   a processing section having at least one programmable processor configured to receive and process data from the plurality of acoustic receivers, the processor being in communication with a memory storing instructions executable by the processor to cause the processor to process the data;
   causing the processor to execute the stored instructions, wherein the stored instructions cause the processor to:
      measure responses of said receivers to energy emitted by said source in a plurality of azimuthal angular segments per tool rotation; and
      determine at least one of compressional or shear velocities as a function of azimuthal angle and depth within the borehole from the measured responses; and
      generating one or more borehole images from the determined velocities as a function of azimuthal angle and depth.

Determining at least one of compressional or shear velocities as a function of azimuthal angle and depth within the borehole from the measured responses may comprise determining both compressional and shear velocities.

The method may further comprise determining depths of bed boundaries of a plurality of formations from said borehole image of said compressional wave velocity.

The stored instructions may cause the processor to determine at least one of compressional or shear velocities as a function of azimuthal angle and depth within the borehole from the measured responses by:
stacking the measured responses for a predetermined sample time increment to form a full waveform stack for each of the plurality of azimuthal angular segments; and
semblance processing the full waveform stacks.

The acoustic source may be focused perpendicular to the borehole wall.

The plurality of acoustic receivers may comprise six receivers.

Measuring responses of said receives to energy emitted by said source in a plurality of azimuthal angular segments per tool rotation may comprise dividing the response signals into a plurality of contiguous azimuthal bins.

Generating one or more images from the determined velocities may comprise generating one or more images of non-acoustic data as a function of azimuthal angle and depth.

The non-acoustic data may comprise electromagnetic data.

The non-acoustic data may comprise nuclear data.

The method may further comprise determining mechanical strength of said formation by combining said compressional wave velocity with a corresponding measure of density of said formation.

A further aspect of the invention relates to a borehole imaging tool comprising:
at least one acoustic source;
a plurality of acoustic receivers arranged at a plurality of spacings from the at least one acoustic source along a longitudinal axis of the tool; and
a processing section having at least one programmable processor configured to receive and process data from the plurality of acoustic receivers, the processor being in communication with a memory storing instructions executable by the processor to cause the processor to process the data;
wherein the stored instructions cause the processor to:
   measure responses of said receivers to energy emitted by said source in a plurality of azimuthal angular segments; and
   determine at least one of compressional or shear velocities as a function of azimuthal angle and depth within the borehole, thereby facilitating the generation of one or more borehole images from the determined velocities as a function of azimuthal angle and depth.

The stored instructions may cause the processor to determine at least one of compressional or shear velocities as a function of azimuthal angle and depth within the borehole by:
stacking the measured responses for a predetermined sample time increment to form a full waveform stack for each of the plurality of azimuthal angular segments; and
semblance processing the full waveform stacks for each of the plurality of azimuthal angular segments.

The acoustic source may be focused perpendicular to the borehole wall.

The plurality of acoustic receivers may comprise six receivers.

The plurality of azimuthal angular segments may comprise sixteen equal and contiguous azimuthal bins.

A still further asepect of the invention relates to a method of generating borehole images of at least one of compressional wave and shear wave velocities of a formation intersecting the borehole wall, the method comprising:
disposing within a borehole a tool, the tool comprising:
   at least one acoustic source; and
   a plurality of acoustic receivers arranged at a plurality of spacings from the at least one acoustic source along a longitudinal axis of the tool;
   conveying the tool along the borehole and, during the conveying, rotating the tool within the borehole;
   during the conveying along and rotating within the borehole measuring responses of the receivers to energy emitted by said source in a plurality of azimuthal angular segments per tool rotation;
   coupling to the tool at least one programmable processor programmed to receive and process the measured responses of receivers to determine at least one of compressional or shear velocities as a function of azimuthal angle and depth within the borehole from the measured responses; and
   generating one or more borehole images from the determined velocities as a function of azimuthal angle and depth.

At least one of the at least one programmable processors may be disposed within the tool.

Compression velocities may be computed by the at least one programmable processor disposed within the tool and shear velocities may be computed by at least one programmable processor not disposed within the tool.

Generating one or more borehole images from the determined velocities as a function of azimuthal angle and depth may be performed by the programmable processor.

Generating one or more borehole images from the determined velocities may include generating one or more borehole images of other data as a function of azimuthal angle and depth and may be performed by the programmable processor.

The other data may be electromagnetic data.

The other data may be nuclear data.

The method may further comprise determining mechanical strength of said formation by combining said compressional wave velocity with a corresponding non-acoustic measurement of said formation.

The at least one programmed processor may determine compressional or shear velocities as a function of azimuthal angle and depth within the borehole from the measured responses by: stacking the measured responses for a predetermined sample time increment to form a full waveform stack for each of the plurality of azimuthal angular segments; and
semblance processing the full waveform stacks.

### BRIEF DESCRIPTION OF THE DRAWINGS

The manner in which the above recited features and advantages, briefly summarized above, are obtained can be understood in detail by reference to the embodiments illustrated in the appended drawings.
Fig. 1 is a conceptual side view illustration of an acoustic imaging logging system in a borehole environment;
Fig. 2 is a conceptual sectional view of the acoustic logging tool again disposed within the borehole and taken through the source section;
Fig. 3 shows a flow chart for the data processing methodology;
Fig. 4 shows a borehole acoustic image with detail at the pixel level; and
Fig. 5 illustrates a full borehole image logs of formation compressional wave slowness and shear wave slowness.

### DETAILED DESCRIPTION

Disclosed herein is a system for producing borehole images of acoustic properties of formations intersecting a borehole wall. Images of formation compressional wave and shear wave velocities are generated in real time. Additional formation and borehole information can be obtained from the images by combining them with additional independent parametric formation property measurements such as density, neutron porosity, resistivity and the like. As an example, an indication of the strength of the formation can be determined using a measured density property and the acoustic properties of the formation. As another example, acoustic properties can be combines with measurements from the directional section 29 to indicate the magnitude and absolute direction of dipping beds.

If embodied as a wireline logging system, the source and receiver sections must be synchronously rotated as the wireline tool is conveyed within a borehole. Alternatively, an array of sources and receivers can be disposed around the tool and sequentially operated to achieve a similar effect to rotation. Additionally, by stating that the rotation is synchronous with the conveying along the borehole, it is to be understood that the rotation and conveying can take place in a step-wise or other discontinuous fashion. For example, the tool can be conveyed some distance, stopped, rotated, and again conveyed, etc. Any such arrangements that are still generally coincident, even if not specifically isochronous, are sufficient to generate the borehole images described herein. The system can also be embodied as a tubing conveyed or a slick line logging system assuming that the tool can be rotated within the borehole. The details of the system are hereafter disclosed as a LWD system.

### Hardware

Hardware for the acoustic imaging tool is essentially the same as the hardware disclosed in U.S. Patent Publication US 2012/0026831 A1, which is hereby entered into this disclosure by reference. The receiver section 22 comprises array of axially spaced receiver stations R₁, R₂, ... R₆ shown at 24. Each receiver station comprises an acoustic energy receiver. It should be understood that more than six or fewer than six receivers could be used. Furthermore, many of the design options, responses characteristics and data processing methods of the present acoustic imaging system are presented in detail US 2012/0026831 A1.

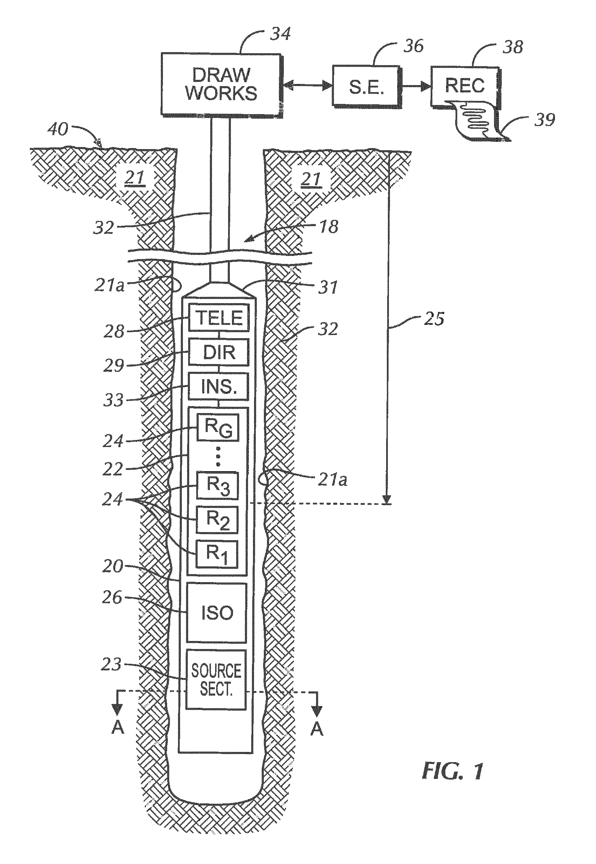

A conceptual side view illustration of an acoustic logging system in a borehole environment is show in Fig. 1. An acoustic borehole instrument or "tool" 20 comprising a source section 23 comprising a source of acoustic energy. The source is preferably operating in a frequency range of approximately 6 to 16 KHz. The tool 20 also comprises a receiver section 22 comprising an array of preferably six receiver stations 24, but as discussed, more than six or fewer than six receivers may be used. The tool 20 is shown suspended in a borehole 18 that penetrates earth formation material 21. An isolation section 26 may be used to minimize direct transmission of acoustic energy from the source section 23 to the receiver section 22. The tool 20 is attached to a lower end of conveyance means 32 by a suitable connector 31. The upper end of the conveyance means 32 terminates at draw works 34, which is electrically connected to surface equipment 36. Output from the surface equipment 36 cooperates with a recorder 38 that produces a borehole image "log", of one or more acoustic parameters of interest as a function of tool depth within the well borehole. As mentioned previously, the system can be embodied in a plurality of borehole logging systems. As examples, if the acoustic borehole imaging logging system is a wireline system, the acoustic tool 20 is a wireline tool, the conveyance means 32 is a logging cable, and the draw works 34 is a cable winch hoist system that is well known in the art. The cable also serves as a data and control conduit between the wireline logging tool 20 and the surface equipment 36. If the acoustic logging system is a LWD or MWD system, the acoustic tool 20 is an acoustic tool typically disposed within a drill collar, the conveyance means 32 is a drill string, and the draw works 34 is a rotary drilling rig that is well known in the art. As mentioned previously, the system will be disclosed as a LWD system.

As illustrated in Fig. 1, the receiver section 22 may include an array of six axially spaced receiver stations R₁, R₂, ... , R₆ shown at 24. Embodied as a LWD system, the receiver section 22 and the source 23 are disposed within the wall of the tool 20. In a preferred embodiment, all receiver stations 24 are azimuthally aligned with the source 23, and the acoustic receivers disposed within the receiver stations are focused perpendicular to the borehole wall 21a, as is the source of acoustic energy within the source section 23. As stated previously, it should be understood that more than six or fewer than six receivers could be used.

Still referring to Fig. 1, the tool 20 further comprises an instrument section 33 that comprises power, control, a programmable processor and memory elements required to operate the tool. The tool 20 may also include a directional section 29 that is used to measure an "absolute" position of the logging tool 20, as will be discussed in subsequent sections of this disclosure. A downhole telemetry element is shown at 28. This is used to telemeter data between the tool 20 and an "uphole" telemetry element (not shown) preferably disposed in the surface equipment 36. The surface equipment 36 may also include at least one programmable processor. As an example, these data typically include previously defined V_{p,j}(x) and V_{s,j}(x) compressional and shear wave velocities from azimuthal angle segments j. These data can optionally be stored within memory (not shown), which may be disposed within the instrument section 33, for subsequent removal and processing at the surface of the earth 40. Command data for operating the tool 20 may also be telemetered from the surface via the telemetry system.

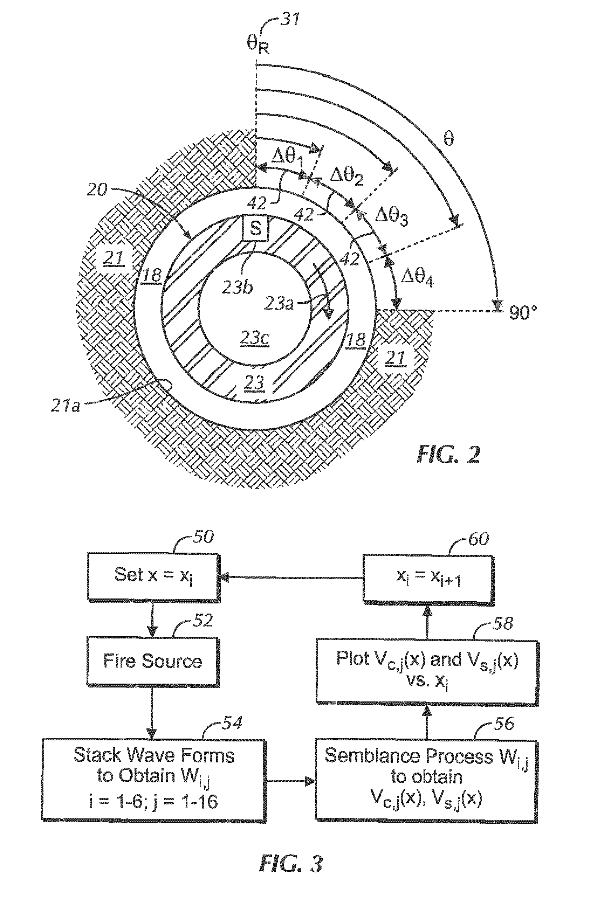

Fig. 2 is a sectional view of the LWD tool 20 taken through the source section 23 at A-A. The tool 20 is again shown disposed within the borehole 18. The source section 23 (and therefore the tool 20) may be rotated about the major axis of the tool 20 as indicated conceptually by the arrow 23a. An acoustic source, which is illustrated as a unipole source for a preferred embodiment, is shown at 23b. The conduit in the LWD tool 20 through which drilling fluid flows is denoted at 23c. The angle *θ* is defined by the acoustic wave front normal emitted by the source 23b and the major axis of symmetry of the tool 20. A reference angle *θ_{R}* at 31 is defined as 0 degrees for convenience, and azimuthal segments j = 1, 2, ... 16 are partially illustrated for brevity as *Δθ₁, Δθ₂,* ... Δ*θ₄* at 42. Recall that Δ*θⱼ* is preferably 22.5 degrees, although other values could be selected. Referring again to Fig. 1, the logging tool 20 preferably comprises a directional section 29 to relate the tool orientation to some absolute reference angle defined as *θ_{ABS}* which can be magnetic north, the "high" side of a deviated borehole, and the like.

The above disclosure is based upon the use of a unipole acoustic source. If the formation shear velocity is slower than the mud velocity, the unipole source must be operated at a lower frequency, the Stonely wave arrival determined from the semblance calculations, and shear velocity inferred from the Stonely arrival. Alternately, a dipole source can be used with the transmitter source consisting of two sides at 180 degrees and firing out of phase with each other. It should be understood that other acoustic sources, such as a quadrapole source, could be used as long as the source is configured to focus acoustic energy perpendicular to the wall of the well borehole.

### Data Acquisition and Processing

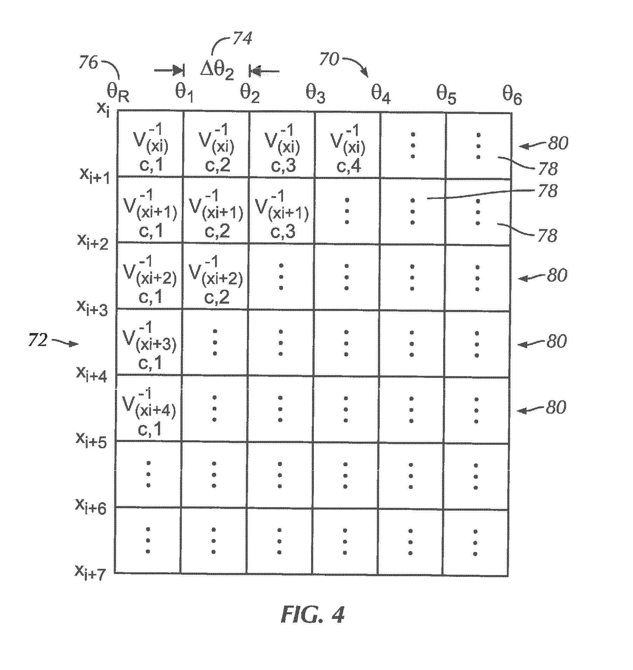

Embodied as a LWD system, the unipole source 23b may be operated at a frequency of approximately 6-16 kilohertz (KHz) and the logging tool 20 may be rotated within, and conveyed along the borehole 18. The acoustic wave field generated by the pulse from the acoustic source is received by each acoustic receiver within each receiver station (i = 1, 2, ... , 6) comprising the receiver section 22 as full acoustic waveforms. In the scenario where the logging tool 20 rotates, as illustrated conceptually by the arrow 23a, waveforms from each of the six receivers are sampled and may be digitized every 100 milliseconds. These waveforms may be partitioned or "binned" into each 22.5 degree azimuthal segment Δ*θⱼ* yielding 16 azimuthal segments (j = 1, 2, ... , 16) for each 360 degree tool rotation. The binning may continue for a sample time increment (e.g., 5 to 30 seconds), with the waveforms being algebraically summed or "stacked" in each respective azimuthal segment over the sample time increment to yield full waveform stacks W_{i,j}(x) at a depth x within the well, as denoted in Fig 1 as 25. At the end of the sample time increment, stacked waveforms from each of six receivers "i", collected at a depth x, are semblance process for each azimuthal segment yielding V_{p,j}(x) and V_{s,j}(x). These parameters may be used to form a "pixel line" (see Fig. 4) that represent the compressional and shear acoustic wave velocities, respectively, determined in azimuthal segment j where again j (j = 1, 2, ... ,16). The process may be repeated as the tool is conveyed along the well borehole forming a plurality of pixel line measures for V_{p,j}(x) and V_{s,j}(x) as a function of tool depth x. The pixel lines of measures of Vₚ and Vₛ as a function of depth form a borehole image of these acoustic parameters

In the context of this disclosure, the term "annotate" means that the parameters Vp(x) and Vₛ(x) are stored, tabulated, plotted and the like with the corresponding depth at which they were determined. Semblance calculations V_{p,j}(x) and V_{s,j}(x) may be performed in a processor disposed within the instrument section 33 of the logging tool 20 as are the previously discussed stacking operations. These values may be telemetered via to the downhole telemetry unit 28 to the surface equipment 36, matched with the corresponding depth x at which the measurements were made, and plotted by recorder 38 yielding a borehole image of compressional and shear wave velocity Vₚ and Vₛ as a function of depth x.

Fig. 3 is a flow chart of an exemplary data processing methodology. A tool depth register is set at 50. The acoustic source is fired at 52. At 54, full waveforms are recorded in the 1 = 1-6 receivers are binned stacked in azimuthal segments j = 1-16 yielding the previously discussed parameters W_{i,j}(x). At 56, semblance processing is applied to W_{i,j}(x) yielding the parameters V_{p,j}(x) and V_{s,j}(x). At 58, V_{p,j}(x) and V_{s,j}(x) are plotted as a function of corresponding j and xᵢ values to obtain a pixel line at depth xᵢ of acoustic borehole images of interest. The depth register is incremented at 60 and steps 50 through 58 are repeated thereby generating the next pixel line of the acoustic borehole parameters of interest, namely Vₚ and Vₛ.

### Results

Fig. 4 illustrates the development of a borehole image of formation compressional wave slowness by illustrating pixel lines 80 as a function of corresponding tool depth xᵢ. Only a small section of the full borehole image of this formation property is illustrated for brevity. The abscissa 70 shows 6 of the j = 16 the azimuthal segments 74, each with a magnitude Δ*θⱼ* of 22.5 degrees for this embodiment. The ordinate 72 represents depth intervals xᵢ, of the logging tool within the well borehole. The pixel elements 78 at depth xᵢ contain compressional slowness measurements 1/V_{p,j}(xᵢ) as illustrated, with slowness being the inverse of compressional wave velocity.

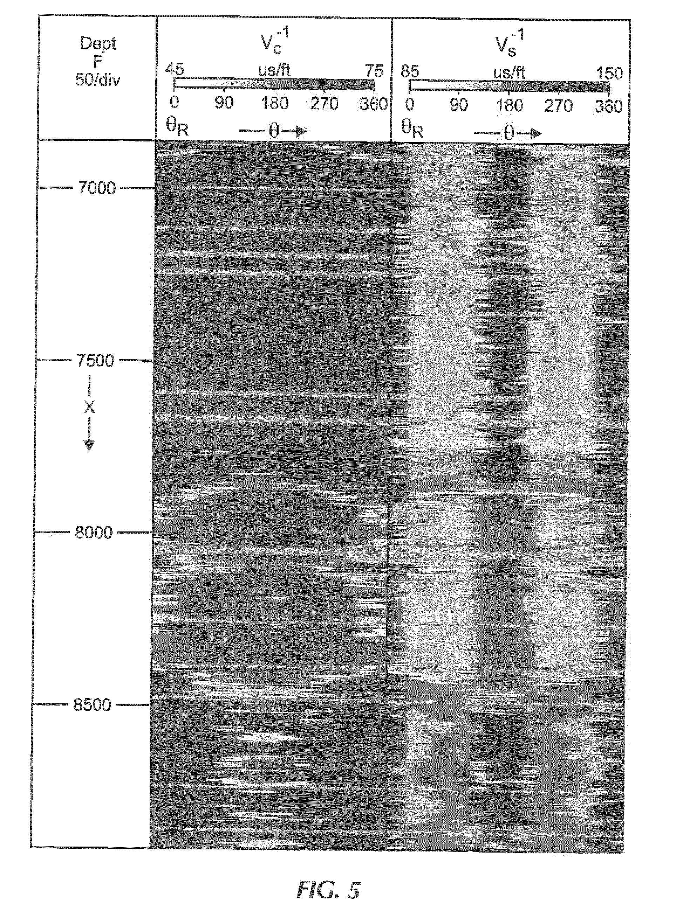

Fig. 5 illustrates a full borehole image logs of formation compressional wave slowness and shear wave slowness. The abscissa is in degrees with the magnitudes of compressional and shear wave slowness being given by the illustrated gray scale in units of microseconds per foot. The degrees can be measured using the previously discussed absolute reference and as the reference angle, or a relative reference such as the top of a deviated borehole. As in the pixel representation of Fig. 4, the ordinate represents depth, in feet, of the logging tool within the borehole.

Upon examining the images shown on Fig. 5, bedding layers and bed boundaries are clearly show in high resolution. It is again noted that acoustic borehole imaging as disclosed above does not depend upon the type of drilling fluid as do electromagnetic imaging systems. Acoustic borehole imaging does not depend upon contrasting natural gamma ray activity of beds as do imaging systems based upon natural gamma ray measurements. Finally, acoustic borehole imaging does not require the use of a radioactive source in the logging tool as do density and neutron porosity imaging systems.

Again referring to Fig. 5, both the images of shear and compresional slowness indicate dipping beds from about 7850 feet to about 8500 feet. The direction of dip appears to be about 180 degrees with respect to the reference angle.

As mentioned previously, many geophysical parameters of interest can be calculated or observed from only measures of compressional wave velocity processed downhole. Calculations may be performed, using predetermined algorithms, preferably in the programmable processor disposed in the instrument section 33. This includes, but is not limited to, the determination of formation strength by combining compressional wave velocity with corresponding formation density.

Conventional acoustic log measurements may be combined with non-acoustic log measurements, such as nuclear and electromagnetic logs, to obtain one or more additional formation parameters of interest. For example, acoustic logs may be combined with gamma ray logs to obtain logs of formation permeability. Acoustic logs may be combined with neutron porosity logs to obtain logs of formation lithology. Rock mechanic properties may be obtained by combining acoustic logs and formation density logs. Finally, source rock logs may be obtained by combining acoustic logs and resistivity logs. These logs may be determined mathematically using preprogrammed downhole or surface processors.

Electromagnetic and nuclear borehole image logs are known in the art. These non-acoustic image logs may be combined with acoustic image logs to obtain borehole images logs of one or more additional formation parameters of interest, such as permability, lithology, and source rock potential. The combination process occurs at the pixel level using computed log methodology discussed previously. As an example, consider the generation of a lithology borehole image log by combining compressional slowness and neutron porosity image logs. Referring again to Fig. 4 and using the same mathematical formalism as discussed previously:
V_{p,i}(x) = the compressional wave slowness in the i^{th} azimuthal angular segment at depth x;
Pᵢ(x) = the neutron porosity measured in the i^{th} azimuthal segment at depth x;
Lᵢ(x) = f(V_{p,i}(x), Pᵢ(x)) where f(V_{p,i}(x), Pᵢ(x)) is a mathematical relationship, known in the art, for combining V_{p,i}(x) and Pᵢ(x) to obtain formation lithology Lᵢ(x) in the i^{th} azimuthal angular segment at depth x.

As with the compressional wave acoustic borehole image log, the lithology image log is a plot of Lᵢ(x) for each azimuthal angular segment as a function of depth x.

As mentioned previously, depths of bedding planes and formation interfaces are delineated as illustrated in Fig. 5. It is noted that formation bedding is clearly illustrated in the compressional borehole image (Vc), but essentially not visible in the shear wave borehole image (Vs). As an example, note the compressional image in the interval of approximately 7800 feet (2377 meters) to 8500 feet (2591 meters). The absolute orientation of dipping beds can be obtained by combining measured compressional wave data with absolute directional measurements from the tool directional section 29.

The above disclosure is to be regarded as illustrative and not restrictive, and the invention is limited only by the claims that follow.

## Claims

1. A method of generating borehole images of compressional wave and shear wave velocities of a formation intersecting the borehole wall, the method comprising:
disposing within a borehole a tool, the tool comprising:
at least one acoustic source;
a plurality of acoustic receivers arranged at a plurality of spacings from the at least one acoustic source along a longitudinal axis of the tool; and
a processing section having at least one programmable processor configured to receive and process data from the plurality of acoustic receivers, the processor being in communication with a memory storing instructions executable by the processor to cause the processor to process the data;
causing the processor to execute the stored instructions, wherein the stored instructions cause the processor to:
measure responses of said receivers to energy emitted by said source in a plurality of azimuthal angular segments per tool rotation; and
determine at least one of compressional or shear velocities as a function of azimuthal angle and depth within the borehole from the measured responses; and
generating one or more borehole images from the determined velocities as a function of azimuthal angle and depth.

2. The method of claim 1 wherein determining at least one of compressional or shear velocities as a function of azimuthal angle and depth within the borehole from the measured responses comprises determining both compressional and shear velocities.

3. The method of claim 2 further comprising determining depths of bed boundaries of a plurality of formations from said borehole image of said compressional wave velocity.

4. The method of claim 1, 2 or 3 wherein the stored instructions cause the processor to determine at least one of compressional or shear velocities as a function of azimuthal angle and depth within the borehole from the measured responses by:
stacking the measured responses for a predetermined sample time increment to form a full waveform stack for each of the plurality of azimuthal angular segments; and semblance processing the full waveform stacks.

5. The method of any preceding claim wherein the acoustic source is focused perpendicular to the borehole wall.

6. The method of any preceding claim wherein the plurality of acoustic receivers comprise six receivers.

7. The method of any preceding claim wherein measuring responses of said receives to energy emitted by said source in a plurality of azimuthal angular segments per tool rotation comprises dividing the response signals into a plurality of contiguous azimuthal bins.

8. The method of any preceding claim wherein generating one or more images from the determined velocities comprises generating one or more images of non-acoustic data as a function of azimuthal angle and depth, and optionally wherein the non-acoustic data comprises electromagnetic data, or wherein the non-acoustic data comprises nuclear data, or further comprising determining mechanical strength of said formation by combining said compressional wave velocity with a corresponding measure of density of said formation.

9. A method of any preceding claim wherein said source and said receivers sections are axially aligned;
and further comprising stacking said measured responses for a sample time increment thereby forming a full waveform stack for each said azimuthal angular segment;
processing said full waveform stacks for each said azimuthal angular segment to determine said one or more acoustic parameters as a function of azimuthal angle;
annotating said one or more acoustic parameters as a function of azimuthal as a function of depth of said tool within said borehole to form a pixel line at that depth;
repeating the measuring, processing and annotating as said tool is conveyed along said borehole thereby forming a plurality of pixel lines as a function of depth; and
forming said borehole image from said pixel lines as a function of depth;
wherein said one or more acoustic parameters include at least one of compressional wave velocity or compressional wave slowness.

10. The method of any preceding claim comprising:
conveying the tool along the borehole and, during the conveying, rotating the tool within the borehole; and
during the conveying along and rotating within the borehole measuring responses of the receivers to energy emitted by said source in a plurality of azimuthal angular segments per tool rotation.

11. A borehole imaging tool comprising:
at least one acoustic source;
a plurality of acoustic receivers arranged at a plurality of spacings from the at least one acoustic source along a longitudinal axis of the tool; and
a processing section having at least one programmable processor configured to receive and process data from the plurality of acoustic receivers, the processor being in communication with a memory storing instructions executable by the processor to cause the processor to process the data;
wherein the stored instructions cause the processor to:
measure responses of said receivers to energy emitted by said source in a plurality of azimuthal angular segments; and
determine at least one of compressional or shear velocities as a function of azimuthal angle and depth within the borehole, thereby facilitating the generation of one or more borehole images from the determined velocities as a function of azimuthal angle and depth.

12. The tool of claim 11 wherein the stored instructions cause the processor to determine at least one of compressional or shear velocities as a function of azimuthal angle and depth within the borehole by:
stacking the measured responses for a predetermined sample time increment to form a full waveform stack for each of the plurality of azimuthal angular segments; and
semblance processing the full waveform stacks for each of the plurality of azimuthal angular segments.

13. The tool of claim 11 or 12 wherein the acoustic source is focused perpendicular to the borehole wall.

14. The tool of claim 11, 12 or 13 wherein the plurality of acoustic receivers comprise six receivers.

15. The tool of claim 11, 12, 13 or 14 wherein the plurality of azimuthal angular segments comprise sixteen equal and contiguous azimuthal bins.
